# EUROPÄISCHE PATENTSCHRIFT

(11) **EP 3 379 118 B1**
(45) Veröffentlichungstag und Bekanntmachung des Hinweises auf die Patenterteilung: **14.08.2019**
(21) Anmeldenummer: 18159033.2
(22) Anmeldetag: 28.02.2018
(51) Int. Cl.: F16K 15/02

(54) **RÜCKSCHLAGVENTIL**
RETURN VALVE
CLAPET ANTI-RETOUR

(30) Priorität: 06.03.2017 DE 102017203574
(43) Veröffentlichungstag der Anmeldung: 26.09.2018
(73) Patentinhaber: Erhard GmbH & Co. KG, 89522 Heidenheim (DE)
(72) Erfinder: Reiter, Thomas, 73450 Ohmenheim (DE)
(74) Vertreter: Dr. Weitzel & Partner

(56) Entgegenhaltungen:
- EP-A1- 1 640 584
- CN-U- 201 827 464
- CN-U- 203 532 879
- DE-A1- 2 911 404
- DE-U1- 20 100 128
- JP-A- H09 229 215

## Beschreibung

Die vorliegende Erfindung betrifft ein Rückschlagventil.

Solche Ventile sind in einer großen Anzahl von Varianten seit langem bekannt. Sie werden in eine Rohrleitung eingebaut, die ein Medium führt, beispielsweise Wasser, Luft, Gase oder sonstige flüssige Medien. Sie dienen dazu, das Medium nur in einer einzigen Richtung durchströmen zu lassen, somit einen Rückfluss in die Gegenrichtung zu unterbinden. Solche Ventile umfassen ein Gehäuse mit einem Ventilteller. Der Ventilteller ist senkrecht zur Strömungsrichtung angeordnet. Er ist axial verschiebbar. In einer ersten Position, nämlich der Schließposition, liegt er an einem Sitz des Gehäuses an und sperrt damit jeglichen Durchfluss von Medium ab. In einer zweiten Position ist er axial vom Sitz abgefahren und befindet sich damit in Offen position.

Zum Halten des Ventiltellers dient ein Einsatz, der mit der Gehäusewandung fest verbunden ist, und zwar über Stege. Der Ventilteller ist mit einem Schaft fest verbunden. Der Schaft ist im Einsatz axial verschiebbar gelagert. Mit einem Verschieben des Schaftes wird auch der Ventilteller in die gewünschte Position verbracht, somit entweder in die Schließposition oder in die Offenposition.

Ventile dieser Art sind z.B. aus DE20100128U1, welches ein Ventil gemäß dem Oberbegriff des Anspruchs1 zeigt, oder DE2911404A1 bekannt.

Die Anforderungen, die an moderne Rückschlagventile gestellt werden, sind unterschiedlich. Sie sind im Laufe der letzten Jahre gestiegen, insbesondere durch höhere Drücke, wie z.B. höhere Mediumdrücke und größere Durchmesser. Die folgenden Anforderungen werden verlangt: zuverlässiger Betrieb, insbesondere einwandfreies Öffnen und Schließen, größte Zuverlässigkeit des Schließprozesses, hohe Anforderungen an die Zuverlässigkeit auch nach längerem Betrieb bezüglich des Arbeitsergebnisses, insbesondere der Zuverlässigkeit des Schließens (Absperrens) Korrosionsbeständigkeit, Senkung der Herstellungskosten, beispielsweise durch Materialersparnis, Standardisierung von Einzelteilen, leichte Montierbarkeit.

Die bekannten Rückschlagventile sind bezüglich einiger oder aller der genannten Forderungen verbesserungsbedürftig. Der Erfindung liegt die Aufgabe zugrunde, solche Verbesserungen zu bewirken. Diese Aufgabe wird durch die Merkmale von Anspruch 1 gelöst.

Die Erfindung ist anhand der Zeichnung näher erläutert. Darin ist im Einzelnen Folgendes dargestellt:
- Figur 1: zeigt ein Düsenrückschlagventil in einem Axialschnitt.
- Figur 2: zeigt ein weiteres Düsenrückschlagventil, ebenfalls in einem Axialschnitt, mit zwei Ventileinheiten in einem einzigen Gehäuse.

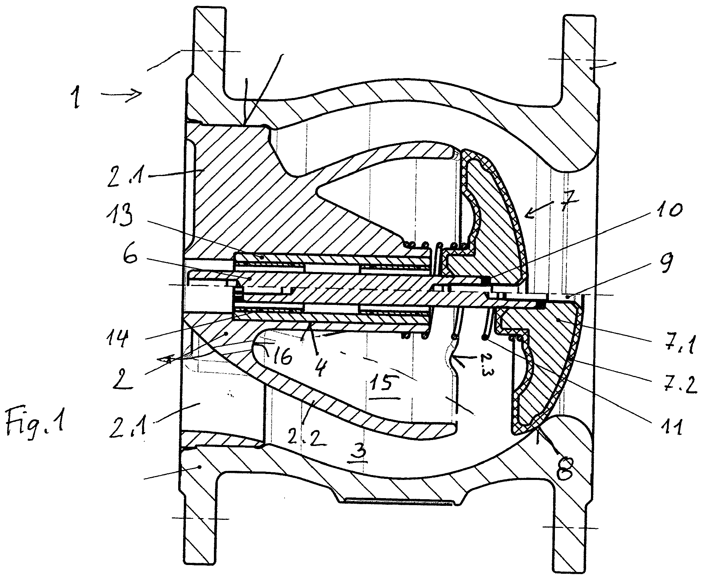

Das in Figur 1 gezeigte Düsenrückschlagventil umfasst ein Gehäuse 1. Mit dem Gehäuse ist ein Einsatz 2 verbunden, und zwar mittels Stegen 2.1. Diese sind Bestandteil des Einsatzes 2. Die Stege sind dünnwandig, sodass sie die Strömung nicht beeinflussen. Gehäuse und Einsatz sind durch Klebung miteinander verbunden. Siehe die Klebestelle 2.4.

Zwischen der Innenfläche des Gehäuses 1 und der Außenfläche des Einsatzes 2 ist ein Strömungskanal 3 gebildet.

Der Einsatz 2 weist eine Axialbohrung 4 auf. In dieser ist ein Schaft 6 gleitend gelagert.

Man erkennt weiterhin einen Ventilteller 7. Dieser ist mit dem Schaft 6 fest verbunden, wie weiter unten noch erklärt werden soll.

Ventilteller 7 und Gehäuse 1 bilden miteinander einen Ventilsitz 8.

Der Ventilteller 7 besteht aus einem Metallkörper 7.1 und einem isolierenden Überzug 7.2. Der Überzug 7.2 kann aus jeglichem Material bestehen, beispielsweise aus Gummi oder einem anderen gummielastischen Material wie irgendeinem Kunststoff. Der Überzug kann eine Folie sein, die auf den Metallkörper 7.1 aufgebracht wird, oder eine Schicht, die durch Aufsprühen oder sonstige Verfahren aufgebracht wird. Der Überzug hüllt den Metallkörper 7.1 auf seiner mediumberührten Fläche völlig ein. Er reicht zur Mantelfläche des Schaftes 6. Schaft 6 besteht am besten aus Edelstahl. Schaft 6 und Ventilteller 7 sind durch eine Schraube 9 miteinander fest verbunden, im vorliegenden Falle eine Senkkopfschraube. Die Schraube ist in axialer Richtung zentral durch den Ventilteller 7 hindurchgeführt und in den Schaft 6 eingeschraubt. Eine zuverlässige Verbindung zwischen Ventilteller 7 und Schaft 6 könnte auch durch einen Presssitz oder durch eine Schrumpfverbindung hergestellt werden.

Die Mantelfläche von Schaft 6 und die zugewandte Fläche des Metallkörpers 7.1 des Ventiltellers 7 sind gegeneinander abgedichtet, siehe den O-Ring 10.

Eine Druckfeder 11 ist zwischen den Einsatz 2 und dem Ventilteller 7 geschaltet. Sie hat das Bestreben, den Ventilteller 7 gegen den Ventilsitz 8 anzudrücken - siehe in Figur 1 die untere Hälfte. Das Anpressen des Ventiltellers 7 an den Ventilsitz 8 tritt dann ein, wenn kein Medium strömt - in Figur 1 von rechts kommend. Strömt aber Medium, von rechts kommend, gegen den Ventilteller 7, so wird die Kraft der Feder durch den Strömungsdruck überwunden, sodass sich der Ventilteller 7 in Offenposition befindet - so wie in der oberen Hälfte von Figur 1 gezeigt.

Die Axialbohrung 4 ist mit einer Buchse 13 ausgekleidet, beispielsweise einer Messingbuchse. Zwischen Buchse 13 und der Mantelfläche des Schaftes 6 befinden sich Gleitbuchsen 14 aus Kunststoff.

Das Gehäuse 1 weist an seinen beiden Enden Flansche 1.1, 1.2 auf. An diese werden Rohrleitungsabschnitte angeschlossen - hier nicht dargestellt.

Wie man sieht, ist das Gehäuse 1 ausgebaucht. Der Einsatz 2 weist eine kelchförmige Wand 2.2 auf. Diese hat einen gekrümmten Verlauf, analog dem Verlauf der ausgebauchten Gehäusewand. Die kelchförmige Wand 2.2 des Einsatzes umschließt einen Hohlraum 15.

Trifft ein strömendes Medium auf den Ventilteller 7 - in Figur 1 von rechts kommend, und ist der Strömungsdruck entsprechend hoch, so wird die Kraft der Druckfeder 11 überwunden, und der Ventilteller 7 samt Schaft 6 bewegen sich nach links. Ventilteller 7 kommt auf der freien Kante der kelchförmigen Wand 2.2 des Einsatzes 2 zum Aufliegen, so wie in der oberen Hälfte von Figur 1 gezeigt.

Die stromaufwärtige Kante des Einsatzes 2 weist eine Aussparung 2.3 auf. Diese hat folgende Bedeutung: in Offenposition des Ventiltellers 7 - siehe in Figur 1 die obere Hälfte - kann in den Hohlraum 15 Wasser eindringen. Hierdurch wird ein Spüleffekt erreicht, der verhindert, dass sich Fremdpartikel, insbesondere Schmutzpartikel, im Hohlraum 15 ansammeln, was zu einer Beschädigung der Druckfeder 11 führen kann. Auch wird verhindert, dass im Hohlraum 15 für eine längere Zeitspanne ein Wasserquantum verbleibt, und das der Fäulnis unterliegt. Es kann auch daran gedacht werden, an anderer Stelle des Hohlraumes 15 in der Wandung 2.2 eine Bohrung vorzusehen, so dass in Offenposition des Ventiltellers 7 eine gewisse Durchspülung des Hohlraumes stattfindet.

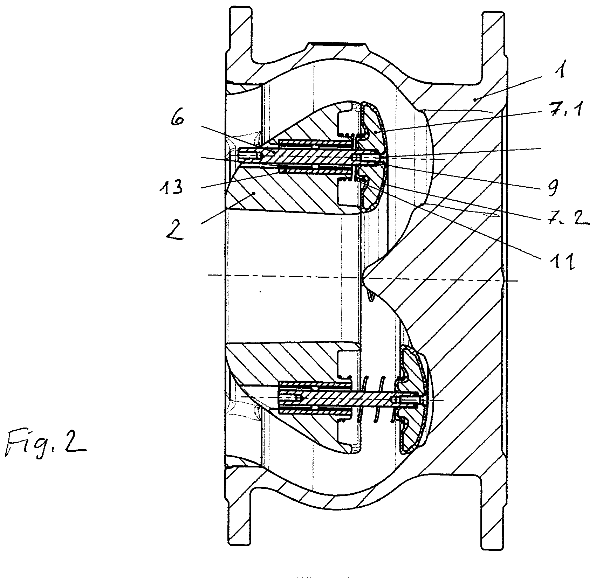

Die Ausführungsform gemäß Figur 2 weist ein einziges Gehäuse 1 auf, sowie einen ringförmigen Einsatz 2, mit zwei zugehörenden Ventiltellern 7, 7, jeweils getragen von einem Schaft 6, 6. Auch hier besteht jeder Ventilteller 7 wiederum aus einem Grundkörper 7.1 und einem Überzug 7.2.

Der Grundkörper 7.1 kann aus Metall oder aus einem anderen Material bestehen, beispielsweise aus Kunststoff. Dies gilt auch für die Ausführungsform von Figur 1.

### Bezugszeichenliste

- 1: Gehäuse
- 1.1: Gehäuseflansch
- 1.2: Gehäuseflansch
- 2: Einsatz
- 2.1: Steg
- 2.2: kelchförmige Wand
- 2.3: Aussparung
- 2.4: Klebestelle
- 3: Strömungskanal
- 4: Axialbohrung
- 6: Schaft
- 7: Ventilteller
- 7.1: Grundkörper
- 7.2: Überzug
- 8: Ventilsitz
- 9: Schraube
- 10: Dichtung
- 11: Druckfeder
- 13: Buchse
- 14: Gleitbuchse
- 15: Hohlraum
- 16: Bohrung

## Patentansprüche

1. Düsenrückschlagventil, umfassend die folgenden Merkmale:
1.1 ein Gehäuse (1);
1.2 einen Einsatz (2), der mit dem Gehäuse (1) über Stege (2.1) verbunden ist;
1.3 einen zwischen der Innenfläche des Gehäuses (1) und der Außenfläche des Einsatzes (2) gebildeten Strömungskanal (3);
1.4 der Einsatz (2) weist eine Axialbohrung (4) auf;
1.5 einen Schaft (6), der in der Axialbohrung (4) gleitend gelagert ist und der an seinem einen Ende einen Ventilteller (7) trägt;
1.6 Ventilteller (7) und Gehäuse (1) bilden miteinander einen Ventilsitz (8);
1.7 der Ventilteller (7) besteht aus einem Grundkörper (7.1) und einem Überzug (7.2),
1.8 zwischen Ventilteller (7) und Schaft (6) ist eine Dichtung (10) vorgesehen;
1.9 die den Strömungskanal (3) begrenzende Fläche des Einsatzes (2) ist aus einer kelchförmigen Wand (2.2) gebildet;
1.10 die kelchförmige Wand (2.2) umschließt einen Hohlraum (15);
1.11 die angeströmte Kante des Einsatzes (2) weist eine randoffene Aussparung (2.3) auf;
**gekennzeichnet durch** die folgenden Merkmale:
1.12 die Wandung (2.2) des Hohlraumes (15) weist eine Bohrung (16) auf, die eine Durchspülung des Hohlraumes (15) erlaubt;
1.13
der Überzug (7.2) hüllt die mediumberührte Fläche des Grundkörpers (7.1) völlig ein.

2. Düsenrückschlagventil nach Anspruch 1, **gekennzeichnet durch** die folgenden Merkmale:
es ist eine Druckfeder (11) vorgesehen, die zwischen Einsatz (2) und Ventilteller (7) geschaltet ist und die auf den Ventilteller (7) im Sinne eines Schließens wirkt.

3. Düsenrückschlagventil nach Anspruch 1 oder 2, **dadurch gekennzeichnet, dass** die Laibung der Axialbohrung (4) mit einer Buchse (13) ausgekleidet ist.

4. Düsenrückschlagventil nach einem der Ansprüche 1 bis 3, **dadurch gekennzeichnet, dass** die Mantelfläche des Schaftes (6) von einer Gleitbuchse (14) umgeben ist.

5. Düsenrückschlagventil nach einem der Ansprüche 1 bis 4, **dadurch gekennzeichnet, dass** der Ventilteller (7) eine Durchgangsbohrung oder eine Sackbohrung aufweist, in die das genannte Ende des Schaftes (6) eingeführt ist.

6. Düsenrückschlagventil nach Anspruch 5, **dadurch gekennzeichnet, dass** Schaft (6) und Ventilteller (4) mittels eines Schrumpfsitzes oder Presssitzes oder mittels Klebung fest miteinander verbunden sind.

7. Düsenrückschlagventil nach Anspruch 5, **dadurch gekennzeichnet, dass** Schaft (6) und Ventilteller (7) durch eine Schraube (9) fest miteinander verbunden sind, und dass die Schraube (9) in den Ventilteller (7) in axialer Richtung eingeführt und in das genannte Ende des Schaftes (6) eingeschraubt ist.

## Claims

1. Nozzle check valve, comprising the following features:
1.1 a housing (1);
1.2 an insert (2) which is connected to the housing (1) via webs (2.1);
1.3 a flow channel (3) which is formed between the inner face of the housing (1) and the outer face of the insert (2);
1.4 the insert (2) has an axial bore (4);
1.5 a shaft (6) which is slidably mounted in the axial bore (4) and which carries a valve plate (7) at one end;
1.6 the valve plate (7) and the housing (1) together form a valve seat (8);
1.7 the valve plate (7) consists of a main body (7.1) and a coating (7.2);
1.8 a seal (10) is provided between the valve plate (7) and the shaft (6);
1.9 the face of the insert (2) that bounds the flow channel (3) is formed of a cup-shaped wall (2.2);
1.10 the cup-shaped wall (2.2) encloses a cavity (15);
1.11 the inflow edge of the insert (2) has an open-edged cutout (2.3);
**characterized by** the following features:
1.12 the wall (2.2) of the cavity (15) has a bore (16) which enables the cavity (15) to be flushed through;
1.13 the coating (7.2) fully covers the face of the main body (7.1) that makes contact with the medium.

2. Nozzle check valve according to claim 1, **characterized by** the following features:
a compression spring (11) is provided, which is arranged between the insert (2) and the valve plate (7) and which acts on the valve plate (7) in the closing direction.

3. Nozzle check valve according to claim 1 or 2, **characterized in that** the soffit of the axial bore (4) is lined with a bushing (13).

4. Nozzle check valve according to one of claims 1 to 3, **characterized in that** the outer surface of the shaft (6) is surrounded by a slide bushing (14).

5. Nozzle check valve according to one of claims 1 to 4, **characterized in that** the valve plate (7) has a through-bore or a blind bore, into which said end of the shaft (6) is introduced.

6. Nozzle check valve according to claim 5, **characterized in that** the shaft (6) and the valve plate (4) are fixedly connected to one another by means of a shrink fit or press fit or by adhesive bonding.

7. Nozzle check valve according to claim 5, **characterized in that** the shaft (6) and the valve plate (7) are fixedly connected to one another by a screw (9), and **in that** the screw (9) is introduced into the valve plate (7) in the axial direction and is screwed into said end of the shaft (6).

## Revendications

1. Soupape anti-retour de buse, comprenant :
1.1 un corps (1) ;
1.2 un insert (2) relié au corps (1) par des barrettes (2.1) ;
1.3 un canal d'écoulement (3) formé entre la surface intérieure du corps (1) et la surface extérieure de l'insert (2) ;
1.4 l'insert (2) présentant un alésage axial (4) ;
1.5 une tige (6) supportée de façon coulissante dans l'alésage axial (4) et qui porte un disque de soupape (7) à une extrémité ;
1.6 le disque de soupape (7) et le corps (1) formant ensemble un siège de soupape (8) ;
1.7 le disque de soupape (7) se composant d'un corps de base (7.1) et d'un revêtement (7.2),
1.8 une garniture d'étanchéité (10) étant prévue entre le disque de soupape (7) et la tige (6),
1.9 la surface de l'insert (2) qui délimite le canal d'écoulement (3) étant formée par une paroi en forme de calice (2.2),
1.10 laquelle paroi en forme de calice (2.2) entoure une cavité (15) ;
1.1 le bord de l'insert (2) exposé à l'écoulement présentant une découpe (2.3) ouverte vers le bord,
**caractérisée en ce que** :
1.12 la paroi (2.2) de la cavité (15) présente un alésage (16) qui permet une irrigation de la cavité (15) ;
1.13 le revêtement (7.2) entoure complètement la surface du corps de base (7.1) en contact avec le fluide.

2. Soupape anti-retour de buse selon la revendication 1, **caractérisée en ce qu'**il est prévu un ressort de compression (11) qui est disposé entre l'insert (2) et le disque de soupape (7) et qui agit sur le disque de soupape (7) dans le sens de la fermeture.

3. Soupape anti-retour de buse selon la revendication 1 ou 2, **caractérisée en ce que** le la surface intérieure de l'alésage axial (4) est habillée par une douille (13).

4. Soupape anti-retour de buse selon l'une des revendications 1 à 3, **caractérisée en ce que** la surface d'enveloppe de la tige (6) est entourée par une douille coulissante (14).

5. Soupape anti-retour de buse selon l'une des revendications 1 à 4, **caractérisée en ce que** le disque de soupape (7) présente un alésage traversant ou un alésage borgne dans lequel ladite extrémité de la tige (6) est introduite.

6. Soupape anti-retour de buse selon la revendication 5, **caractérisée en ce que** la tige (6) et le disque de soupape (4) sont reliés à demeure l'une à l'autre au moyen d'un frettage ou d'un calage à la presse ou au moyen d'un collage.

7. Soupape anti-retour de buse selon la revendication 5, **caractérisée en ce que** la tige (6) et le disque de soupape (7) sont reliés à demeure l'une à l'autre par une vis (9) et **en ce que** la vis (9) est introduite dans le disque de soupape (7) dans le sens axial et vissée dans ladite extrémité de la tige (6).
